# EUROPEAN PATENT SPECIFICATION

(11) **EP 1 177 110 B1**
(45) Date of publication and mention of the grant of the patent: **29.09.2004**
(21) Application number: 00918876.4
(22) Date of filing: 11.04.2000
(51) Int. Cl.: B44C 1/00, B32B 17/10, B44C 5/04, B44F 1/04, B44F 1/06, B44F 1/08, E06B 3/66

(54) **METHOD FOR MANUFACTURING TRANSPARENT MEMBERS, SUCH AS GLASS AND THE LIKE**
HERSTELLUNGSVERFAHREN FÜR DURCHSICHTIGE GEGENSTÄNDE, WIE GLAS UND ÄHNLICHES
PROCEDE DE FABRICATION DE SUBSTANCES TRANSPARENTES, TELLES QUE DU VERRE OU ANALOGUE

(30) Priority: 12.04.1999 IT MI990741; 07.03.2000 IT VA200004
(43) Date of publication of application: 06.02.2002
(73) Proprietor: Barban, Gianfranco, 21013 Gallarate (IT)
(72) Inventor: Barban, Gianfranco, 21013 Gallarate (IT)
(74) Representative: Savi, Alberto
(86) International application number: PCT/EP2000/003331
(87) International publication number: WO 2000/061383

(56) References cited:
- EP-A- 0 169 509
- WO-A-88/03518
- AT-B- 351 223
- FR-A- 2 349 720
- US-A- 3 424 515
- US-A- 4 085 533
- US-A- 4 390 240
- US-A- 4 756 938
- US-A- 4 798 695
- US-A- 5 271 973

## Description

The present invention refers to a method for manufacturing transparent members of glass, or the like, to be used as decorative and pictorial coatings for posters, buildings and furniture.

Specifically, the present invention refers to a method for giving particular desired colours to transparent or semitransparent members of glass, or the like, however avoiding to apply solid and irremovable dyes to said members making possible to change colours without difficult and expensive operations, such as peeling, cleaning and new painting of the members to which it is willing to change colour.

Also more specifically, the present invention intends to give desired and variable colours to large size vertically arranged surfaces, such as coating panels of rooms, building fronts, doors, windows and the like.

Presently, vitreous and plastic transparent materials are coloured with specific paints, usually surface smeared either on one of two opposed faces, in order to let appear the colour through the thickness of the member, or on both faces of the member, loosing however the depth sensation given by the transparency.

A surface smeared paint is however prone to scratches, peeling and the like and it is very difficult, if not impossible to change its colour, if that were desired, owing to the strength of its adherence on smearing supports substantially preventing a removal thereof without undesired consequences.

Peeling of the paints, either through dissolving them by means of solvents, or through mechanical abrasion produce generally poor results because:
a) many times a paint, once dried and chemically changed by setting process, is poorly soluble in solvents;
b) unless the support is of glass, per se solvent insensitive, it happens that the solvent itself can etch and partially dissolve the support itself, as often occurs with many kinds of plastic supports;
c) the abrasives usually scratch the surfaces of the supports, which hardly can be polished to make them transparent enough.

Generally the above mentioned paint removing systems appeared difficult and labour consuming, being so expensive, to make often less expensive to replace an article than to however rework it.

As a first attempt to overcome the above mentioned drawbacks and make easily painted substantially transparent supports, it has been devised to paint the inside of an article, by completely insulating of the colour from external agents and then saving transparency, brightness and hue variant. Such an attempt has some success, however maintains the drawback of the impossibility of however changing both the colours and the images formed inside the article.

As a second attempt, it has been devised to make a transparent pane, provided with at least a chamber comprised between at least two transparent plates, to be filled with a coloured liquid, to change on will the colour of the pane, by changing the liquid admitted in the chamber.

The prior art lists a number of chambers, according to this attempt, comprised between transparent panes to be filled with either moving or steady coloured liquids.

For example, US-A-3,706,149 discloses a display device, for producing colour effects, consisting of at least two separated liquid sealed chambers defined between at least three optically transparent plates, containing at least two differently coloured liquids, in which are admitted from the bottom air bubbles which, climbing into the chambers produce random variable chromatic effects. Such a device produces just an aesthetic effect due to the bubbles climbing and floating along the chamber.

US-A-3,898,781 discloses a structure of a transparent floor tile comprising a chamber, defined between two transparent face plates, to be filled with a viscous liquid mixed with air bubbles and, possibly, solid bodies thinner in thickness than the chamber and different in colour from the viscous liquid. At least one of the face plates is flexible enough to allow under the operation of an external force, such as the weight of people walking on the floor tile, the movement of the bubbles and of the solid bodies and the possible fraction of the bubbles in smaller bubbles with apparent variable aesthetic effects. Such a system produces the said aesthetic effects, which appear variable, but poorly controllable, and further it is just suited for horizontally arranged articles, such as floor tiles, because, having at least a compliant face, it is not suitable to a chamber to be vertically arranged which would be distorted under the weight of the liquid. Thus the system is not suited to large size plates to be vertically installed.

US-A-4,034,493 discloses a movable display device, to be arranged according to two each other reversed orientations comprised of two either transparent or translucent plates, defining between them a closed chamber, provided at the top and the bottom with two respective reservoirs, containing one of the reservoirs a first liquid and the other reservoir with the chamber containing a second liquid, being the two liquids each other immixible, different enough in density and one, for example the first one, heavier than the other. When the device is arranged with the reservoir of the heavier liquid on the top, the liquid itself flows down through the closed chamber separating itself in liquid drops or beads which, by flowing along obstacles arranged in the chamber, produce aesthetic effects substantially random changing. At last, the heavier liquid is collected in the lower reservoir from which it can come out, to repeat the aesthetic effect just by reversing the orientation of the device, so that the bottom side becomes the top side, allowing a reverse migration of the heavier liquid and repeating the same random aesthetic effects. Such a device produces some aesthetic effects, but having to be reversed for continuing the aesthetic effects, may have just limited size and thus it is not suited to embody tall vertical chambers having the size of the walls of a room.

US-A-4,057,921 discloses a decorative device comprising two chambers, defined between three transparent plates, each containing two immixible liquids having different densities and colours such as to have different chromatic effects which can random change when the orientation of the device is reversed to have the former upper side becoming the lower side. Also this device, as the device disclosed in US-A-4,034,493, is not suited to embody tall vertical chambers.

US-A-4,085,533 discloses a device for producing aesthetic effects within closed containers by inputting therein at least three liquids different in density and each other immixible, arranging the three liquids one on top of the other according to their decreasing density. Means for moving at least one of the liquids, such as pumps, for producing aesthetic effects movable inside the containers themselves. Also such a device is useful for producing aesthetic effects, also movable, in a more or less random way, however just in limited size containers, as in its disclosure nothing is told about the shape, the size and the orientation of the containers and no provisions are taken for enhancing the strength of the walls and the bottom of large size chambers.

US-A-4,395,835 discloses a device providing in two chambers, defined by three adjacent transparent plates, different effects of layered colours, when the device is standing, and colours multiple, strongly variable in a complex and random way when the device is distorted and reversed. Such a device, having to be movable, can have just limited size and its disclosure reveals nothing useful for the solution of the technical problems faced by the present invention.

In all the above listed prior art publications, in particular US-A-4,085,533 at column 8, lines 33 to 37, is taken for granted the solution of the problems of how to seal the chambers to be filled with coloured liquids, how to assure a sufficient adhesion between plates forming the chambers, how to resist the pressure of the liquids tending to move apart the plates and how to avoid that the coloured liquids filling the chambers can etch the sealing of the chambers or the adhesive joining the plates themselves, US-A-4,085,533 just stating at column 8 lines 48 to 51, that "it is possible to use transparent plastics materials joined together by adhesive". Unfortunately the above problems are still existing and one of the duties of the present invention is to solve them.

The above mentioned problems are overcome by the present invention providing a method for manufacturing transparent members, obtained by forming inside an article to be coloured, chambers suited to be filled by one or more coloured liquids, wherein the chambers are provided into plate assemblies, of which at least one of them is transparent,
characterized by a superimposition of at least two of the plates and interposition of an adhesive gasket peripherally arranged for defining the chambers, being the two plates bonded by the adhesive gasket; and
by a groove which is dug at least along a side of a transparent plate for helping the admission of liquids into the chambers and effectively limiting the expansion of the adhesive gasket.

Particularly, is formed an assembly of plates having, in front of the chambers to be filled by a liquid, a transparent or semitransparent image, provided by a film sandwiched between two transparent plates.

More particularly, such an embodiment with incorporated image can be either transparent or semitransparent to be back illuminated.

Alternatively, the embodiment with incorporated image can be provided with a reflecting bottom to be front illuminated.

Specifically, the method is characterized by admitting a coloured liquid, such as an alcohol, a glycol, a hydrocarbon, or similar liquids, allowing sufficient transparency and intensive enough colouring, through a hole properly located for a distribution thereof in desired portions.

In particular, glass plates, or similar transparent plates, among which cavities or chambers shaped according to desired drawings are formed, are each other joined by means of adhesive gaskets.

Alternatively, the plates can be joined along their external perimeter and the each other faced chambers, defined between two plates, are filled with one of the coloured liquids.

In addition, it is possible to "inflate" an interface between planar plates with a pressurised coloured liquid to form a lenticular shape able to produce variable colours and hues due to the thickness of the chamber where the liquid is injected.

Preferably, in accordance with the method, transparent plates can be coupled with adhesive gaskets both along the perimeter and on portions of the internal depiction field of images, so that to form a sandwich provided with one or more internal chambers.

In particular, the coupling is obtained with a film of plastic material used in the production of safety glass plates, the thickness of the film being used for defining the chambers to be filled with the coloured liquid, so resulting in the thickness of the chambers being equal to that of the film.

Preferably, the thickness of the film ranges between a few tenths of millimetre and a few millimetres.

In particular, to embody a drawing appearing between the plates, the film is cut in advance according to the desired drawing, by removing the portions intended to provide the chamber to be filled with liquid.

More in particular, these lacking portions form large chambers for producing uniform colour panes.

Still in particular, the lacking portions are small inlays for ornamental purposes, such as geometric drawings, floral motives or the like.

Alternatively, the inlays depict technical drawings representing maps and/or industrial processes.

Still alternatively, the inlays depict scientific and didactical representations, such as animal and vegetal circulatory systems.

According to a particular embodiment of the method, are devised combinations of more superimposed chambers obtained by coupling many glass plates, or the like, possibly each other communicating through holes in the thickness of the interposed plates, which make possible the creation of many colour drawings by admission of different coloured liquids driven to different chambers.

Preferably, in the case of many level chambers, devices, providing the liquid distribution, are hidden by properly arranged painting, and either mirror or half-mirror metal coatings.

In addition, it is possible to circulate two immiscible liquids, by admitting them from coaxial ducts and removing them from different ducts arranged at different levels for having a threadlike flow of one of the liquids into one or more other liquids.

Alternatively, it is possible to admit liquids of very different density (as for example water and a hydrocarbon oil) to embody curtains having variable extension and transparency to be used as sun screens or anti-dazzle filters in automotive field.

In addition, the transparent plates defining at least a chamber are so thin and/or flexible that an assembly thereof could be used as surface coating.

Also in addition, the chambers are sized in such a way to avoid or limit either yielding or sacking due to the pressure connected to the head of the liquid in the chambers.

Further in addition, the chambers between the plates are defined by using so-called can plates, that is plates already provided with chambers obtained, for example, by extrusion.

The features of the present invention will be defined by the claims forming the conclusive portion of this description. However other features and advantages of the invention will result from the here below detailed description of some embodiments, given just as non limiting examples, provided with the enclosed drawings, wherein:
- Figure 1 is a cross-section, partial, and exploded view of a first pane formed by transparent planar plates according to the present invention;
- Figure 2 is a lateral, partial and cross-sectioned view of the same pane of figure 1;
- Figure 3 is a lateral, partial and cross-section view of a second pane defining a chamber between transparent plates made of lenticular shape by pressurised liquid in the chamber itself;
- Figure 4 is a cross-section, partial, lateral and exploded view of a third more complex pane, containing reflecting plates;
- Figure 5 is a cross-section, partial, lateral view of the same pane of figure 4; and
- Figure 6 is a lateral, partial and cross-section view of a fourth pane defining a chamber between two plates.

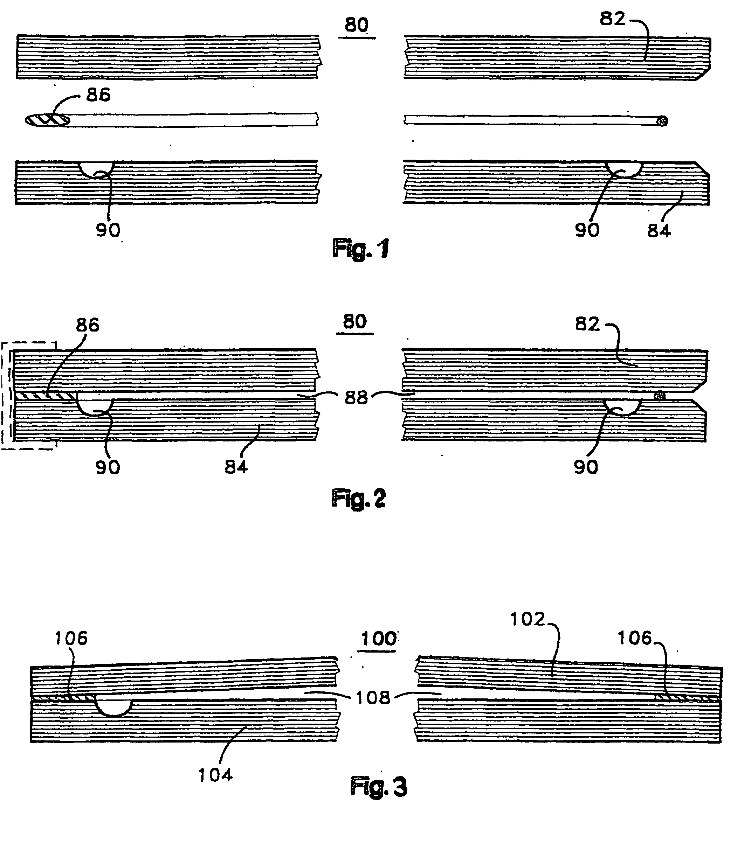

In the figures 1 and 2, it is seen that a first transparent pane 80 is formed by a first transparent plate 82, by a second transparent plate 84 and by an adhesive layer 86 in the form of a frame interposed between the plate 82 and the plate 84. When the two plates 82 and 84 are adjacent arranged and the adhesive layer 86 has been activated, between the two plates 82 and 84 a chamber 88 is formed having thickness of the same order of the adhesive layer 86, being such a chamber 88 to be filled with a liquid having the desired optical properties (for example, a liquid of desired colour). To help the admission of liquids in the chamber 88, can be used one or more grooves 90 dug at least along a side of, for example, the transparent plate 84. In addition, the groove 90 operates as an effective limit to the expansion of the adhesive layer 86, preventing it to spread beyond the groove inside the chamber 88. Preferably, the groove 90 is along the perimeter and adjacent the inside of the adhesive layer 86 shaped as a frame.

In figure 3 is depicted a second pane 100 formed by a first transparent plate 102 and by a second transparent plate 104 kept together by an adhesive layer 106, perimetrally arranged as a frame, defining a chamber 108 between the plates 102 and 104. Such a pane allows, through admission of liquid under suitable pressure, easily determined by skilled people in this art, to inflate the chamber 108 in order to have a higher central thickness, sloping to the perimeter of the plates, to give the pane a substantially lenticular shape. Such a shape allows particular aesthetic effects when the chamber 108 is filled with coloured or not coloured liquids, having refraction index well different from the plates 102 and 104, if they were in very thin layers, of the order of the wave length (λ) of the used light, because they could give the layers either shades or iridescence. Further, in the case that the pane were horizontally arranged, such as a plane of a table, the insertion of a gas bubble, such as air, would produce effects of variable images for any minimal strain due to weights laid on the table itself.

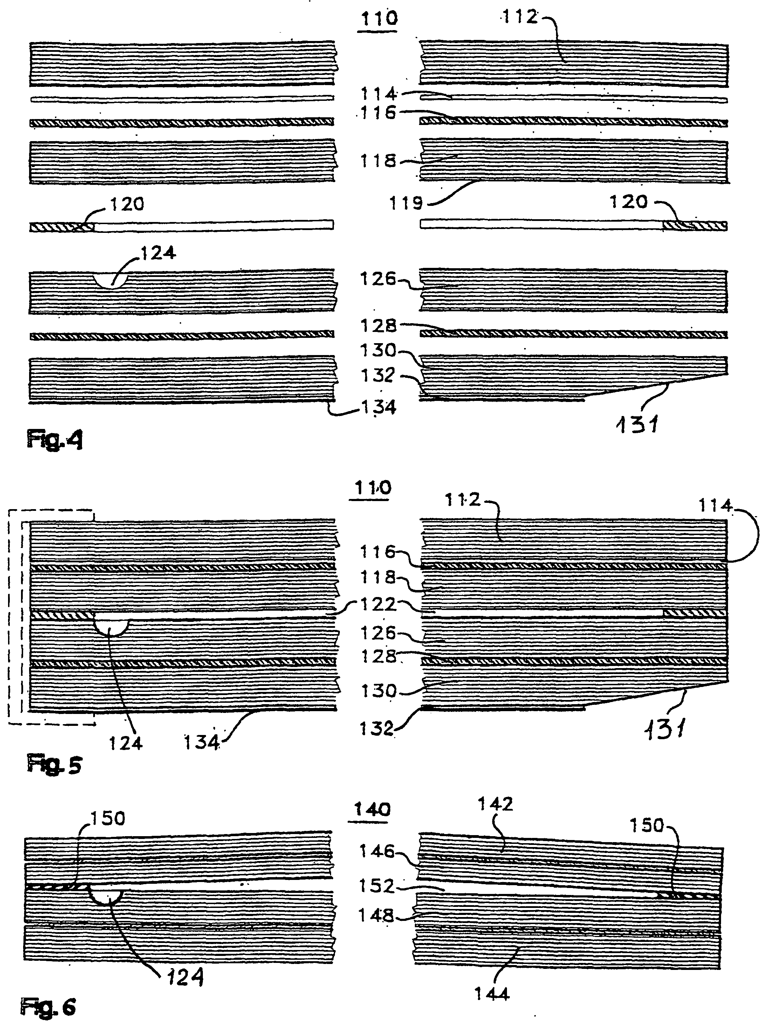

Let us consider the figures 4 and 5 depicting a third pane 110 particularly suited for the embodiment of plates having ornamental functions for pane of furniture, buildings and the like of the kind to be illuminated by reflection, having the purpose of coating opaque surfaces. Such a pane 110 comprises a first transparent plate 112 (for example glass) having downside a film 114, supporting for example xerographic images, resting on a sheet 116 of plastic material coupling two plates, such as polyvinyl butyral used for the layering of safety glasses. However, such a sheet 116 is not indispensable and can be omitted. Under the film 114, and the possible sheet 116, is arranged a translucent rather thick film 118, as, for example a glass etched by hydrofluoric acid vapours (HF) (acidified glass), having an inside translucent etching 119, to obtain light scattering effects.

Between the translucent plate 118 and a below transparent plate 126 is inserted an adhesive layer 120, shaped as a perimeter frame, operating to connect the translucent plate 118 to the below transparent plate 126, leaving between them a chamber 122, filled by a liquid, to be chosen, for obtaining the desired aesthetic effects, being the chamber fed by a groove 124 for a uniform distribution of the coloured liquid. The transparent plate 126 (for example glass) rests on a coupling sheet 128 of the same material of the sheet 116, such as polyvinyl butyral, providing to connect the plate 126 to a mirror 130 comprising a plate provided with top grinding 131 and lower reflecting layer 132 (such as a silver coating) operating to reflect the light coming from the outside of the pane 110 without sharply reflect the external images, which could be undesirable. At last, a solid layer 134 protects the reflecting layer 132 to avoid accidental wear or peeling. Such a so complex assembly manages to produce changing reflecting surfaces in accordance to the colours of the liquids either admitted or circulated in the chamber 122 defined between plates 118 and 126. Also, by choosing to circulate a pair of immixible liquids, of which one is moved as a threaded flow in the other one, particular aesthetic effects can be obtained.

Figure 6 depicts a fourth pane 140, which can be either transparent or reflecting, and is made of lenticular shape by pressurised liquid in a chamber internal in the same pane 140, as it occurs for the pane 100 depicted in figure 3. Particularly, such a pane 140 is made of a first top plate 142, a bottom plate 144 and two intermediate plates 146 and 148, of which the plate 146 is translucent through treatment with hydrofluoric acid (HF) and the plate 148 illuminates, by transparency or reflection, the pane 140, being said plates 146 and 148 joined by an adhesive layer 150 arranged as a frame along the perimeters of the intermediate plates 146 and 148 each other faced. The liquid, used under pressure, gives a lenticular shape to a chamber 152 between the two plate sets, being the plates 142 and 146 deflected as they are more pliable than the lower plates 148 and 144. An optional use of reflecting layers can make this pane suited for external illumination. While the omission of reflecting layers makes it suited to an internal illumination. The obtained effects are similar to that of the pane of figure 3.

What has been here above disclosed refers some embodiments of the invention not to be absolutely held as limiting. Therefore, all those logical and equivalent changing which can be devised by a person skilled in this art, starting from the reading of the above disclosure, have to be considered within the scope of the invention as defined by the here below enclosed claims.

For example, instead of using two transparent planar plates, they could be used the so-called "can" plates, that is already provided with a chamber obtained, for example, by extrusion.

## Claims

1. Method for manufacturing transparent members, obtained by forming inside an article (80, 100, 110, 140) to be coloured, chambers (88, 108, 122, 152) suited to be filled by one or more coloured liquids, wherein the chambers are provided into plate assemblies of which at least one (82, 102, 112, 142) is transparent,
**characterized by** a superimposition of at least two of the plates and interposition of an adhesive gasket (86, 106, 120, 150) peripherally arranged for defining the chambers (88, 108, 122, 152), being the two plates bonded by the adhesive gasket (86, 106, 120, 150); and
by a groove (90, 124) which is dug at least along a side of a transparent plate (84, 104, 126, 148) for helping the admission of liquids into the chambers (88, 108, 122, 152) and effectively limiting the expansion of the adhesive gasket (86, 106, 120, 150).

2. Method, as in claim 1, in which is formed an assembly of plates having, in front of the chambers (122) to be filled by a liquid, a transparent or semitransparent image, provided by a film (114) sandwiched between two transparent plates (112, 118).

3. Method, as in claim 2, in which such an embodiment with incorporated image (114) can be either transparent or semitransparent to be back illuminated.

4. Method, as in claim 2, in which the embodiment with incorporated image (114) can be provided with a reflecting bottom (132) to be front illuminated.

5. Method, as in claims 1 to 4, **characterized by** admitting a coloured liquid, such as an alcohol, a glycol, a hydrocarbon, or similar liquids, allowing sufficient transparency and intensive enough colouring, through a hole properly located for a distribution thereof in desired portions.

6. Method, as in claim 5, in which glass plates, or similar transparent plates, among which cavities or chambers (88, 108, 122, 152) shaped according to desired drawings are formed, are each other joined by means of adhesive gaskets (86, 106, 120, 150).

7. Method, as in claim 5, in which the plates can be joined along their external perimeter and the each other faced chambers (88, 108, 122, 152), defined between two plates, are filled with one of the coloured liquids.

8. Method, as in claims 1 and 5 to 7, in which it is possible to "inflate" an interface between planar plates with a pressurised coloured liquid to form a lenticular shape able to produce variable colours and hues due to the thickness of the chamber (108,152) where the liquid is injected.

9. Method, as in claims 1 to 8, in which transparent plates can be coupled with adhesive gaskets (86, 106, 120, 150) both along the perimeter and on portions of the internal depiction field of images, so that to form a sandwich provided with one or more internal chambers.

10. Method, as in claim 9, in which the coupling is obtained with a film of plastic material used in the production of safety glass plates, the thickness of the film being used for defining the chambers (88, 108, 122, 152) to be filled with the coloured liquid, so resulting in the thickness of the chambers (88, 108, 122, 152) being equal to that of the film.

11. Method, as in claim 10, in which the thickness of the film ranges between a few tenths of millimetre and a few millimetres.

12. Method, as in claim 10, in which to embody a drawing appearing between the plates, the film is cut in advance according to the desired drawing, by removing the portions intended to provide the chamber (88,108,122,152) to be filled with liquid.

13. Method, as in claim 12, in which these lacking portions form large chambers for producing uniform colour panes.

14. Method, as in claim 12, in which the lacking portions are small inlays for ornamental purposes, such as geometric drawings, floral motives or the like.

15. Method, as in claim 14, in which the inlays depict technical drawings representing maps and/or industrial processes.

16. Method, as in claim 14, in which the inlays depict scientific and didactical representations, such as animal and vegetal circulatory systems.

17. Method, as in claims 1 to 16, in which are devised combinations of more superimposed chambers obtained by coupling many glass plates, or the like, possibly each other communicating through holes in the thickness of the interposed plates, which make possible the creation of many colour drawings by admission of different coloured liquids driven to different chambers.

18. Method, as in claim 17, in which in the case of many level chambers, devices, providing the liquid distribution, are hidden by properly arranged painting, and either mirror or half-mirror metal coatings.

19. Method, as in claim 17, in which it is possible to circulate two immiscible liquids, by admitting them from coaxial ducts and removing them from different ducts arranged at different levels for having a threadlike flow of one of the liquids into one or more other liquids.

20. Method, as in claim 17, in which it is possible to admit liquids of very different density, as for example water and a hydrocarbon oil, to embody curtains having variable extension and transparency to be used as sun screens or anti-dazzle filters in automotive field.

21. Method, as in claims 1 to 20, **characterized in that** the transparent plates defining at least a chamber are so thin and/or flexible that an assembly thereof could be used as surface coating.

22. Method, as in claims 1 to 21, **characterized in that** the chambers are sized in such a way to avoid or limit either yielding or sacking due to the pressure connected to the head of the liquid in the chambers.

23. Method, as in claims 1 to 22, **characterized in that** the chambers between the plates are defined by using so-called can plates, that is plates already provided with chambers obtained, for example, by extrusion.

## Patentansprüche

1. verfahren zum Herstellen transparenter Elemente, die gewonnen werden, indem man im Innern eines zu färbenden Gegenstands (80, 100, 110, 140) Kammern (88, 108, 122, 152) bildet, die mit einer oder mehreren gefärbten Flüssigkeiten gefüllt werden können, wobei die Kammern in Plattenanordnungen bereitgestellt werden, von denen mindestens eine (82, 102, 112, 142) durchsichtig ist,
**gekennzeichnet durch** eine Überlagerung mindestens zweier der Platten und Anordnung einer klebenden Dichtung (86, 106, 120, 150) dazwischen, die peripher angeordnet ist, um die Kammern (88, 108, 122, 152) zu bestimmen, wobei die beiden Platten **durch** die klebende Dichtung (86, 106, 120, 150) verbunden werden; und
**durch** eine Rille (90, 124), die entlang mindestens einer Seite einer durchsichtigen Platte (84, 104, 126, 148) ausgespart ist, um den Einlass von Flüssigkeiten in die Kammern (88, 108, 122, 152) zu unterstützen und die Ausdehnung der klebenden Dichtung (86, 106, 120, 150) wirkungsvoll zu begrenzen.

2. Verfahren nach Anspruch 1, bei dem eine Anordnung aus Platten gebildet wird, die vor den durch eine Flüssigkeit zu füllenden Kammern (122) ein durchsichtiges oder halbdurchsichtiges Bild haben, das durch einen Film (114) gebildet wird, der zwischen den beiden durchsichtigen Platten (112, 118) sandwichartig eingebettet ist.

3. Verfahren nach Anspruch 2, bei dem eine derartige Ausführung mit einem eingebauten Bild (114) entweder durchsichtig oder halbdurchsichtig sein kann, um von hinten beleuchtet zu werden.

4. Verfahren nach Anspruch 2, bei dem die Ausführung mit eingebautem Bild (114) mit einem reflektierenden Boden (132) ausgestattet sein kann, um von vorne beleuchtet zu werden.

5. Verfahren nach Anspruch 1 bis 4, **gekennzeichnet durch** Einlassen einer gefärbten Flüssigkeit, wie z.B. ein Alkohol, ein Glykol, ein Kohlenwasserstoff oder ähnliche Flüssigkeiten, die eine ausreichende Durchsichtigkeit und genügend starke Färbung ermöglichen, **durch** ein geeignet angeordnetes Loch für ihre Verteilung in gewünschten Abschnitten.

6. Verfahren nach Anspruch 5, bei dem Glasplatten oder ähnliche durchsichtige Platten, zwischen denen gemäss gewünschter Zeichnungen geformte Hohlräume oder Kammern (88, 108, 122, 152) gebildet sind, mittels klebender Dichtungen (86, 106, 120, 150) miteinander verbunden bzw. zusammengefügt sind.

7. Verfahren nach Anspruch 5, bei dem die Platten entlang ihres äusseren Umfangs zusammengefügt werden können und die zueinanderweisenden Kammern (88, 108, 122, 152), die zwischen zwei Platten bestimmt sind, mit einer der gefärbten Flüssigkeiten gefüllt werden.

8. Verfahren nach Anspruch 1 und 5 bis 7, bei dem es möglich ist, eine Grenzfläche zwischen ebenen Platten mit einer druckbeaufschlagten gefärbten Flüssigkeit "aufzublasen", um eine linsenförmige Gestalt zu erzeugen, die in der Lage ist, veränderliche Farben und Farbtöne aufgrund der Dicke der Kammer (108, 152) zu erzeugen, in welche die Flüssigkeit eingespritzt wird.

9. Verfahren nach Anspruch 1 bis 8, bei dem durchsichtige Platte mit klebenden Dichtungen (86, 108, 120, 150) sowohl entlang des Umfangs als auch auf Abschnitten des inneren Feldes der Bilder verbunden werden können, so dass sie ein Sandwich bzw. einen Schichtaufbau bilden, der mit einer oder mehreren inneren Kammern ausgestattet ist.

10. Verfahren nach Anspruch 9, bei dem die Verbindung mit einem Film aus Kunststoffmaterial erzielt wird, das bei der Herstellung von Sicherheitsglas-Platten verwendet wird, wobei die Dicke des Films verwendet wird, um die mit der gefärbten Flüssigkeit zu füllenden Kammern (88, 108, 122, 152) zu bestimmen, was dazu führt, dass die Dicke der Kammern (88, 108, 122, 152) gleich groß wie die des Films ist.

11. Verfahren nach Anspruch 10, bei dem die Dicke des Films im Bereich von einigen wenigen Zehnteln eines Millimeters und einigen wenigen Millimetern liegt.

12. Verfahren nach Anspruch 10, bei dem zur Ausbildung einer Zeichnung, die zwischen den Platten erscheint, der Film entsprechend der gewünschten Zeichnung vorab geschnitten wird, indem die Abschnitte entfernt werden, die dazu bestimmt sind, um die mit Flüssigkeit zu füllende Kammer (88, 108, 122, 152) zu bilden.

13. Verfahren nach Anspruch 12, bei dem diese fehlenden Abschnitte großflächige Kammern bilden, um gleichförmige farbige Fensterscheiben zu erzeugen.

14. Verfahren nach Anspruch 12, bei dem die fehlenden Abschnitte kleine Einlagen für Verzierungen, wie z.B. geometrische Zeichnungen, Blumenmotive oder dergleichen sind.

15. Verfahren nach Anspruch 14, bei dem die Einlagen technische Zeichnungen zeigen, die Karten bzw. Pläne und/oder industrielle Prozesse darstellen.

16. Verfahren nach Anspruch 14, bei dem die Einlagen wissenschaftliche und didaktische Darstellungen, wie z.B. tierische und pflanzliche Kreislaufsysteme zeigen.

17. Verfahren nach Anspruch 1 bis 16, bei dem Kombinationen mehrerer übereinander gelagerter Kammern vorgesehen sind, die durch Verbinden vieler Glasplatten oder dergleichen gewonnen werden, und die möglicherweise durch Löcher in der Wanddicke der übereinander angeordneten Platten miteinander in Verbindung stehen, wodurch die Erzeugung vielfarbiger Zeichnungen ermöglicht wird, indem man unterschiedlich gefärbte Flüssigkeiten in unterschiedliche Kammern einleitet.

18. Verfahren nach Anspruch 17, bei dem im Falle von Kammern mit mehreren Höhen bzw. Pegeln Vorrichtungen zum Erzeugen der Flüssigkeits-Verteilung durch geeignet angeordnete Zeichnungen und verspiegelte oder halbverspiegelte Metallbeschichtungen versteckt werden.

19. Verfahren nach Anspruch 17, bei dem es möglich ist, zwei unmischbare Flüssigkeiten zu zirkulieren, indem man sie aus koaxialen Leitungen einleitet und sie aus unterschiedlichen Leitungen entfernt, die auf unterschiedlichen Höhen angeordnet sind, um eine fadenartige Strömung einer der Flüssigkeiten in eine oder mehrere andere Flüssigkeiten zu erhalten.

20. Verfahren nach Anspruch 17, bei dem es möglich ist, Flüssigkeiten sehr unterschiedlicher Dichte, wie z.B. Wasser und ein Kohlenwasserstoff-Öl einzuleiten, um Vorhänge mit veränderlicher Ausdehnung und Durchsichtigkeit zu erzeugen, die als Sonnenblenden oder Blendschutz-Filter bei Automobilen verwendet werden können.

21. Verfahren nach Anspruch 1 bis 20, **dadurch gekennzeichnet, dass** die mindestens eine Kammer bestimmenden durchsichtigen Platten so dünn und/oder biegsam sind, dass deren Anordnung als Oberflächenbeschichtung verwendet werden könnte.

22. Verfahren nach Anspruch 1 bis 21, **dadurch gekennzeichnet, dass** die Kammern eine derartige Abmessung haben, dass sie ein Nachgeben oder Durchhängen aufgrund des mit der Oberfläche der Flüssigkeit in den Kammern in Verbindung stehenden Drucks verhindern oder begrenzen.

23. Verfahren nach Anspruch 1 bis 22, **dadurch gekennzeichnet, dass** die Kammern zwischen den Platten unter Verwendung sogenannter Kannenteller bzw. Kannenplatten bestimmt werden, das heisst Platten, die schon mit Kammern ausgestattet sind, die beispielsweise durch Extrusion gewonnen werden.

## Revendications

1. Procédé pour fabriquer des éléments transparents, obtenus en formant à l'intérieur d'un article (80, 100, 110, 140) à colorer, des chambres (88, 108, 122, 152) adaptées pour être remplies par un ou plusieurs liquides colorés, dans lequel les chambres sont prévues dans des ensembles de plaques dont au moins l'une (82, 102, 112, 142) est transparente,
**caractérisé par** une superposition d'au moins deux des plaques et l'interposition d'un joint d'étanchéité adhésif (86, 106, 120, 150) disposé de façon périphérique pour définir les chambres (88, 108, 122, 152), les deux plaques étant collées par le joint d'étanchéité adhésif (86, 106, 120, 150) ; et
par une rainure (90, 124) qui est creusée au moins le long d'un côté d'une plaque transparente (84, 104, 126, 148) pour aider à l'admission de liquides dans les chambres (88, 108, 122, 152) et limiter de façon efficace la dilatation du joint d'étanchéité adhésif (86, 106, 120, 150).

2. Procédé selon la revendication 1, dans lequel un ensemble de plaques est formé comportant, devant les chambres (122) à remplir d'un liquide, une image transparente ou semi-transparente, fournie par un film (114) pris en sandwich entre deux plaques transparentes (112, 118).

3. Procédé selon la revendication 2, dans lequel un tel mode de réalisation comportant une image incorporée (114) peut être soit transparent, soit semi-transparent pour être éclairé par l'arrière.

4. Procédé selon la revendication 2, dans lequel le mode de réalisation avec image incorporée (114) peut être muni d'un fond réfléchissant (132) pour être éclairé par l'avant.

5. Procédé selon les revendications 1 à 4, **caractérisé par** l'admission d'un liquide coloré tel qu'un alcool, un glycol, un hydrocarbure ou des liquides similaires, permettant une transparence suffisante et une coloration suffisamment intense, par un trou convenablement situé pour la distribution de celui-ci dans des parties souhaitées.

6. Procédé selon la revendication 5, dans lequel des plaques de verre ou des plaques transparentes similaires, entre lesquelles sont formées des cavités ou chambres (88, 108, 122, 152) mises en forme conformément à des dessins souhaités, sont jointes les unes aux autres au moyen de joints d'étanchéité adhésifs (86, 106, 120, 150).

7. Procédé selon la revendication 5, dans lequel les plaques peuvent être jointes le long de leur périmètre externe et les chambres qui se font face (88, 108, 122, 152), définies entre deux plaques, sont remplies de l'un des liquides colorés.

8. Procédé selon les revendications 1 et 5 à 7, dans lequel il est possible de « gonfler » une interface entre des plaques planes avec un liquide coloré sous pression pour former une forme lenticulaire capable de produire des couleurs et tonalités variables du fait de l'épaisseur de la chambre (108, 152) où le liquide est injecté.

9. Procédé selon les revendications 1 à 8, dans lequel des plaques transparentes peuvent être couplées avec des joints d'étanchéité adhésifs (86, 106, 120, 150) à la fois le long du périmètre et sur des parties du champ de description interne des images, de façon à former un sandwich muni d'une ou plusieurs chambres internes.

10. Procédé selon la revendication 9, dans lequel le couplage est obtenu avec un film de matière plastique utilisé dans la production de plaques de verre de sécurité, l'épaisseur du film étant utilisée pour définir les chambres (88, 108, 122, 152) à remplir du liquide coloré, avec pour résultat que l'épaisseur des chambres (88, 108, 122, 152) est égale à celle du film.

11. Procédé selon la revendication 10, dans lequel l'épaisseur du film est comprise entre quelques dixièmes de millimètre et quelques millimètres.

12. Procédé selon la revendication 10, dans lequel, pour réaliser un dessin apparaissant entre les plaques, le film est découpé à l'avance selon le dessin souhaité en enlevant les parties destinées à produire la chambre (88, 108, 122, 152) à remplir de liquide.

13. Procédé selon la revendication 12, dans lequel ces parties manquantes forment de grandes chambres pour produire des panneaux de couleur uniforme.

14. Procédé selon la revendication 12, dans lequel les parties manquantes sont de petites incrustations dans un but ornemental, tels que des dessins géométriques, des motifs floraux ou similaires.

15. Procédé selon la revendication 14, dans lequel les incrustations illustrent des dessins techniques représentant des cartes et/ou des processus industriels.

16. Procédé selon la revendication 14, dans lequel les incrustations illustrent des représentations scientifiques et didactiques, telles que des systèmes circulatoires d'animaux et de végétaux.

17. Procédé selon les revendications 1 à 16, dans lequel sont disposées des combinaisons de plusieurs chambres superposées obtenues en couplant de nombreuses plaques de verre, ou similaires, communiquant éventuellement les unes avec les autres par l'intermédiaire de trous dans l'épaisseur des plaques interposées, qui rendent possible la création de nombreux dessins en couleur par admission de différents liquides colorés conduits vers différentes chambres.

18. Procédé selon la revendication 17, dans lequel dans le cas de chambres à nombreux niveaux, des dispositifs assurant la distribution de liquide sont cachés par une peinture convenablement disposée et des revêtements métalliques soit en miroir soit en demi-miroir.

19. Procédé selon la revendication 17, dans lequel il est possible de faire circuler deux liquides immiscibles en les admettant depuis des conduits coaxiaux et en les enlevant de différents conduits disposés à différents niveaux pour obtenir un écoulement filiforme de l'un des liquides dans un ou plusieurs autres liquides.

20. Procédé selon la revendication 17, dans lequel il est possible d'admettre des liquides de densité très différente, comme par exemple l'eau et une huile d'hydrocarbure, pour réaliser des rideaux présentant une extension et une transparence variables à utiliser comme écrans solaires ou filtres anti-éblouissement dans le domaine automobile.

21. Procédé selon les revendications 1 à 20, **caractérisé en ce que** les plaques transparentes définissant au moins une chambre sont si minces et/ou flexibles qu'un ensemble de celles-ci pourrait être utilisé comme revêtement de surface.

22. Procédé selon les revendications 1 à 21, **caractérisé en ce que** les chambres sont dimensionnées de façon à éviter ou limiter soit la déformation, soit le saccage dû à la pression liée à la tête du liquide dans les chambres.

23. Procédé selon les revendications 1 à 22, **caractérisé en ce que** les chambres entre les plaques sont définies en utilisant ce que l'on appelle des plaques-boîtes, c'est-à-dire des plaques déjà pourvues de chambres obtenues par exemple par extrusion.
